# EUROPÄISCHE PATENTANMELDUNG

(11) **EP 1 349 253 A2**
(43) Veröffentlichungstag der Anmeldung: **01.10.2003**
(21) Anmeldenummer: 03006000.8
(22) Anmeldetag: 18.03.2003
(51) Int. Cl.: H02H 11/00

(54) **Steuerschaltung, insbesondere Herdschaltuhr, eines Kochgeräts**

(30) Priorität: 30.03.2002 DE 10214440
(71) Anmelder: Diehl AKO Stiftung & Co. KG, 88239 Wangen (DE)
(72) Erfinder: Fluhrer, Henry, 90489 Nürnberg (DE); Hippler, Claudia, 90513 Zirndorf (DE); Wolf, Johann, 90768 Fürth (DE)
(74) Vertreter: Diehl Patentabteilung

(57) **Zusammenfassung**

Eine Steuerschaltung, insbesondere Herdschaltuhr, eines Kochgeräts vermeidet bei einem Falschanschluss Schäden am Kochgerät dadurch, dass ein Komparator K eine der aktuellen Netzspannung entsprechende erste Spannung Up und eine einer stabilisierten Versorgungsgleichspannung U entsprechende zweite Spannung Ur erfasst. Bei einem Falschanschluss weichen die beiden Spannungen derart voneinander ab, dass ein Relais wenigstens ein Heizelement des Kochgeräts abschaltet und an einer Anzeigeeinrichtung ein Signal auslöst.

## Beschreibung

Die Erfindung betrifft eine Steuerschaltung, insbesondere Herdschaltuhr, eines Kochgeräts, wobei ein Netzteil aus der Netzspannung eine stabilisierte Versorgungsgleichspannung für den Betrieb der Steuerschaltung ableitet.

Elektrische Kochherde werden üblicherweise an das dreiphasige Netz angeschlossen, wobei die Steuerschaltung, insbesondere Herdschaltuhr, und die Heizelemente des Kochgeräts an den Nullleiter und eine der Phasen des Netzes anzuschließen sind. Die Steuereinrichtung und die Heizelemente sind dementsprechend auf die Nennspannung von 230 V ausgelegt.

Beim Anschließen des Kochgeräts kann es zu einem Falschanschluss derart kommen, dass der Nullleiter und eine Phase verwechselt wird. Die Schalteinrichtung und wenigstens eines der Schaltelemente liegen dann an der Phasenspannung von 400 V, wodurch sie zerstört werden können. Ein solcher Falschanschluss führt somit zu einem Kundendienstfall, der kostenaufwändig ist und bei dem schwer nachweisbar ist, wem die Folgekosten eines Falschanschlusses zuzuschreiben sind.

Übliche Herdschaltuhren werden bei einem Falschanschluss elektrisch zerstört. Es sind jedoch auch Herdschaltuhren bekannt, die bei einem Falschanschluss nicht unmittelbar zerstört werden. Dabei bleibt jedoch das Problem, dass nach einem Falschanschluss die Heizelemente oder eines der Heizelemente beim Einschalten zerstört werden können.

Aufgabe der Erfindung ist es, eine Steuerschaltung der eingangs genannten Art vorzuschlagen, durch die bei einem Falschanschluss Schäden am Kochgerät vermieden werden.

Erfindungsgemäß ist obige Aufgabe durch die Merkmale des Anspruchs 1 gelöst.

Dadurch ist erreicht, dass ein Falschanschluss auf einfache Weise über die ohnehin vorhandene Steuerschaltung erkannt wird und diese bei einem Falschanschluss ein Abschalten der Heizelemente einleitet.

Vorteilhafte Ausgestaltungen der Erfindung ergeben sich aus der folgenden Beschreibung eines Ausführungsbeispiels und den Unteransprüchen.

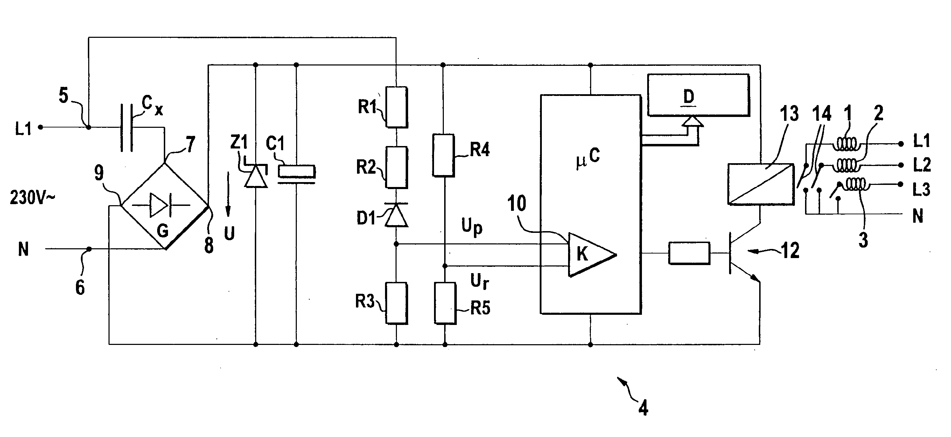

Die Figur zeigt ein schematisches Blockschaltbild einer Steuerschaltung bei einem Kochgerät.

Ein Kochgerät, wie Kochherd, Kochmulde oder Backröhre, weist beispielsweise elektrische Heizelemente 1,2,3 auf, von denen jedes an eine der drei Phasen L1,L2,L3 des Wechselstromnetzes und dessen Nullleiter N anzuschließen sind. Wenigstens eines der Heizelemente 1,2,3 wird in üblicher Weise von einer Herdschaltuhr 4 gesteuert, was in der Figur nicht näher dargestellt ist.

Die Herdschaltuhr 4 weist Anschlüsse 5,6 auf, um sie an die Phase L1 und den Nullleiter N anzuschließen. Aus der zwischen einer der Phasen und dem Nullleiter N stehenden Netzspannung wird mittels eines Netzkondensators Cx und eines Gleichrichters G sowie einer Zenerdiode Z1 und einem zu dieser parallelliegenden Kondensator C1, insbesondere Elektrolytkondensator, eine stabilisierte Versorgungsgleichspannung U für einen Mikrocontroller µC der Herdschaltuhr 4 abgeleitet. Dabei liegt im Regelfalle die Phase L1 am Anschluss 5 und über den Netzkondensator Cx an einem primärseitigen Pol 7 des Gleichrichters G. Den anderen primärseitigen Pol des Gleichrichters G bildet der Anschluss 6. Zwischen sekundärseitigen Polen 8,9 liegen die Zenerdiode Z1 und der Kondensator C1 jeweils parallel. Über die Pole 8,9 erhält der Mikrocontroller µC seine Versorgungsspannung.

Die Herdschaltuhr 4 weist eine optische Anzeigeeinrichtung D auf, die in üblicherweise die Uhrzeit, sonstige Zeiten und/oder Betriebszustände anzeigt. Zusätzlich kann ein von der Herdschaltuhr 4 gesteuerter, nicht näher dargestellter akustischer Signalgeber vorgesehen sein.

Ein Spannungsteiler aus Widerständen R1,R2,R3 und einer Gleichrichterdiode D1 ist zwischen dem Anschluss 5 und den Pol 9 geschaltet. Zwischen dem Widerstand R3 und der Gleichrichterdiode D1 ist eine der aktuellen Netzspannung entsprechende erste Spannung Up abgegriffen und an einen ersten Eingang 10 eines Komparators K gelegt.

An einem Spannungsteiler aus Widerständen R4,R5, der zwischen den sekundärseitigen Polen 8,9 des Gleichrichters G liegt, ist eine zweite Spannung Ur abgegriffen, die an einen zweiten Eingang 11 des Komparators K gelegt ist und als Referenzspannungswert zur Spannung Up dient.

Der Komparator K kann von einer separaten Baugruppe gebildet sein. Der Komparator K kann jedoch auch vom Mikrocontroller µC selbst gebildet sein. Dabei können der Spannungsteiler aus den Widerständen R4 und R5 sowie der Komparator K im Mikrocontroller µC in Form einer Konstante integriert sein. Die Messung der der aktuellen Netzspannung entsprechenden ersten Spannung Up kann über einen internen A/D-Wandler des Mikrocontrollers µC erfolgen. Der Vergleich zwischen dem der ersten Spannung Up entsprechenden aktuellen Netzspannung mit der eine Konstante darstellenden zweiten Spannung Ur kann dann über die Software des Mikrocontrollers µC durchgeführt werden.

Der Komparator K bzw. der Mikrocontroller µC steuert über ein Schaltelement 12, beispielsweise Transistor mit Vorwiderstand, ein Relais 13 an, das in Reihe zum Schaltelement 12 liegt, wobei diese Reihenschaltung zwischen die sekundärseitigen Pole 8,9 des Gleichrichters G geschaltet ist. Über Schaltkontakte 14 des Relais 13 sind die Heizelemente 1,2,3 abschaltbar.

### Die Funktionsweise der beschriebenen Steuerschaltung ist etwa folgende:

Bei polungsrichtigem Anschluss, also wenn die Anschlüsse 5 und 6 an einer Phase L bzw. dem Nullleiter N liegen, besteht zwischen der ersten Spannung Up und der zweiten Spannung Ur zwar eine gewisse Differenz, die von Netzspannungsschwankungen und Bauteiltoleranzen abhängt, jedoch noch nicht einen Schwellwert überschreitet. Die Schaltkontakte 14 des Relais 13 sind dabei geschlossen, so dass die Heizelemente 1 bis 3 in üblicher Weise gesteuert werden.

Bei einer Falschpolung jedoch, wenn beispielsweise an den Anschluss 6 nicht der Nullleiter N, sondern fälschlicherweise die Phase L2 angeschlossen ist, also zwischen den Anschlüssen 5 und 6 die Nominalspannung von 400 V liegt, erhöht sich die erste Spannung Up über den zulässigen Schwellwert hinaus. Dies erfasst der Komparator K in der Weise, dass das Relais 13 die Kontakte 14 öffnet, so dass die Heizelemente 1,2, durch die Überspannung nicht zerstört werden können.

Die Herdschaltuhr 4 wird durch die Überspannung nicht zerstört, weil sie an der stabilisierten Versorgungsgleichspannung U liegt.

Damit dem Benutzer angezeigt wird, dass ein Fehler vorliegt, wird über die optische Anzeigeeinrichtung D dem Benutzer eine entsprechende Nachricht gegeben. Diese kann beispielsweise darin bestehen, dass an der optischen Anzeigeeinrichtung D die Anzeige "HELP" erfolgt. Der Benutzer kann dann geeignet reagieren und Kundendienstpersonal benachrichtigen. Es ist durch die beschriebene Steuerschaltung sichergestellt, dass nach einem Falschanschluss Schäden am Kochgerät nicht auftreten, sondern allenfalls nur der Kochbetrieb unterbrochen ist, bis der richtige Anschluss wieder hergestellt ist.

## Patentansprüche

1. Steuerschaltung, insbesondere Herdschaltuhr, eines Kochgeräts, wobei ein Netzteil aus der Netzspannung eine stabilisierte Versorgungsgleichspannung für den Betrieb der Steuerschaltung ableitet,
**dadurch gekennzeichnet,**
**dass** ein Komparator (K) eine der aktuellen Netzspannung entsprechende erste Spannung (Up) und eine der stabilisierten Versorgungsgleichspannung (U) entsprechende zweite Spannung (Ur) erfasst
und der Komparator (K) beim Abweichen der Differenz der ersten Spannung (Up) und der zweiten Spannung (Ur) von einem Schwellwert über ein Relais (13) wenigstens ein Heizelement (1,2,3) des Kochgeräts abschaltet und an einer Anzeigeeinrichtung (D) ein Signal auslöst.

2. Steuerschaltung nach Anspruch 1,
**dadurch gekennzeichnet,**
**dass** der Schwellwert so bemessen ist, dass er bei einem Falschanschluss des Nullleiters (N) der Netzspannung überschritten ist.

3. Steuerschaltung nach Anspruch 1 oder 2,
**dadurch gekennzeichnet,**
**dass** die aktuelle Netzspannung über einen Spannungsteiler (R1,R2,R3) mit Gleichrichter (D1) als erste Spannung (Up) an den Komparator (K) gelegt ist.

4. Steuerschaltung nach Anspruch 3,
**dadurch gekennzeichnet,**
**dass** der Spannungsteiler mit Gleichrichter (R1,R2,D1,R3) zwischen einem Netzanschluss (5) der Steuerschaltung (4) und einem sekundärseitigen Pol (9) eines Gleichrichters (G) der Steuerschaltung (4) liegt.

5. Steuerschaltung nach einem der vorhergehenden Ansprüche,
**dadurch gekennzeichnet,**
**dass** die stabilisierte Versorgungsgleichspannung (U) über einen Spannungsteiler (R4,R5) als zweite Spannung (Ur) an den Komparator (K) gelegt ist.

6. Steuerschaltung nach Anspruch 5,
**dadurch gekennzeichnet,**
**dass** der Spannungsteiler (R4,R5) zwischen sekundärseitige Pole (8,9) als Gleichrichter (G), der der Erzeugung der stabilisierten Gleichspannung (U) dient, gelegt ist.

7. Steuerschaltung nach einem der vorhergehenden Ansprüche,
**dadurch gekennzeichnet,**
**dass** der Komparator (K) von einem Mikrocontroller (µC) der Steuerschaltung (4) gebildet ist.

8. Steuerschaltung nach einem der vorhergehenden Ansprüche 5 bis 7,
**dadurch gekennzeichnet,**
**dass** der Spannungsteiler (R4,R5) von einem Mikrocontroller (µC) der Steuerschaltung (4) gebildet ist.

9. Steuerschaltung nach einem der vorhergehenden Ansprüche,
**dadurch gekennzeichnet,**
**dass** der Komparator (K) beim Überschreiten des Schwellwerts ein akustisches Signal auslöst.
